# EUROPÄISCHE PATENTSCHRIFT

(11) **EP 0 845 522 B1**
(45) Veröffentlichungstag und Bekanntmachung des Hinweises auf die Patenterteilung: **22.05.2002**
(21) Anmeldenummer: 97118680.4
(22) Anmeldetag: 28.10.1997
(51) Int. Cl.: C10K 1/04, F28D 7/00, F28G 13/00

(54) **Synthesegas-Wärmetauscher-Anlage**
Syngas-heat exchanger apparatus
Echangeur de chaleur pour le gaz de synthèse

(30) Priorität: 29.11.1996 DE 19649532
(43) Veröffentlichungstag der Anmeldung: 03.06.1998
(73) Patentinhaber: MG Technologies AG, 60325 Frankfurt am Main (DE)
(72) Erfinder: Deeke, Wolfgang, Dipl.-Ing., 40822 Mettmann (DE); Gruhlke, Wolfram, Dipl.-Ing., 47918 Toenis-Vorst (DE); Heering, Jürgen, Dr.-Ing., 40668 Meerbusch (DE); Köhnen, Klaus, Dipl.-Ing., 45481 Mülheim (DE)
(74) Vertreter: Revesz, Veronika

(56) Entgegenhaltungen:
- EP-A- 0 416 242
- EP-A- 0 518 813
- DE-A- 2 701 166

## Beschreibung

Die Erfindung betrifft eine Synthesegas-Wärmetauscher-Anlage mit einem Synthesegas-Strahlungskühler, zwei Synthesegas-Konvektionskühlern, einem Rohgas-Reingas-Wärmetauscher, einem Rohgas-Inertgas-Wärmetauscher und mindestens einem Abscheider bzw. ohne einen Synthesegas-Strahlungskühler.

Bekannt sind Wärmetauscher-Anlagen, bei denen der Synthesegas-Strahlungskühler senkrecht und die Synthesegas-Konvektionskühler, Rohgas-Reingas- sowie die Rohgas-Stickstoff-Wärmetauscher horizontal verlegt sind.

Diese Anordnung hat zwar den Vorteil einer geringen Bauhöhe der installierten Ausrüstungen, jedoch den entscheidenden Nachteil der Gefahr des Zuwachsens und des Verstopfens der liegenden Wärmetauscherrohre und der Verbindungsleitungen durch den in Synthesegas mitgeführten Flugstaub und Schlacketeilchen.

Nach dem Abschalten der Anlage verbleibt Reststaub als Staubablagerung in den Wärmetauscherrohren, weil eine Selbstreinigung durch die Schwerkraft der liegenden Rohre nicht gegeben ist. Wenn während des Stillstands und/oder in der Zeit des Aufheizens/Anfahrens Feuchtigkeit in das System gelangt, dann kann sich der Reststaub verfestigen und an den Wärmetauscherrohren anbacken. Hier ist dann der Keim für vollständiges Verstopfen der Rohre während des darauffolgenden Betriebes gelegt. Die Ausrüstungen mit verstopften Rohren sind nicht mehr funktionsfähig, die Folgen hiervon sind Abschaltung der Gesamtanlage, Produktionsausfall, nachfolgend aufwendiges Reinigen der Wärmetauscherrohre und der Verbindungsleitungen.

Die Aufgabe der Erfindung besteht daher darin, eine Synthesegas-Wärmetauscher-Anlage zu schaffen, deren Selbstreinigung von Restteilchen, Staubablagerungen und anderen Feststoffpartikeln während des Heiß-Betriebes, in der Anfahrphase und bei Betriebsstillstand verbessert wird, daß die Massenströme in den einzelnen Wärmetauscherzügen geregelt und daß Betriebsunterbrechungen und erhöhte Wartungskosten vermieden werden.

Die Lösung der Aufgabe erfolgt entsprechend den Merkmalen der beiden Hauptansprüche, die Unteransprüche stellen eine vorteilhafte Ausgestaltung der Erfindung dar.

Erfindungsgemäß weist das System zum Abkühlen und Reinigen des Synthesegases, d. h. Wärmetausch von Rohgas mit Hoch-/Mitteldruckwasser/Reingas oder Stickstoff folgende Funktionsdetails auf:
1) Senkrechte oder geneigte Anordnung der Ausrüstungen zwecks Schwerkraftreinigung,
2) Rußblasemöglichkeit zur Beseitigung von Reststäuben nach dem Abschalten der Anlage sowie unterstützende Reinigung der Wärmetauscherrohre und Verbindungsrohrleitungen während des Betriebes,
3) Verstellmöglichkeit (Regelungsmöglichkeit) der Massenströme der einzelnen Wärmetauscherlinien in den oberen Zuleitungen und/oder in den Verbindungsrohrleitungen zu dem Staubabscheider,
4) Beheizung (z. B. elektrische) für Anfahrvorgänge, vorzugsweise an den Rohgastauschern und an den unteren Verbindungsleitungen,
5) Ausgleich der Wärmedehnung durch federnde Aufhängung der Synthesegas-Konvektionskühler und der Rohgas-/Gas-Wärmetauscher, Einbau von Kompensatoren in den Verbindungsrohrleitungen.
6) Zugänglichkeit der Ein- und Austritte von Synthesegas-Konvektionskühlern, Rohgas-Reingas-Tauschern, Rohgas-Stickstoff-Tauschern durch Anordnung von Hand- oder Mannlöchern.

Erfindungsgemäß verhindert die senkrechte oder geneigte Anordnung der Wärmetauscher auch während des Betriebes sicher das Entstehen von Staubverstopfungen in der Anlage, die aus den folgenden vertikal oder geneigt miteinander verbundenen Ausrüstungen besteht: Synthesegas-Strahlungskühler, Synthesegas-Konvektionskühler, Rohgas-Reingas-Wärmetauscher, Rohgas-Stickstoff-Wärmetauscher, Abscheider mit Massenstromreglern, Rußbläsern sowie spezieller Abstützung.

Durch die vertikale oder stark geneigte Anordnung der Wärmetauscher bewirkt die Schwerkraft der Staubpartikel während des Betriebes und nach dem Abschalten der Wärmetauscher-Anlage, daß sich in den Wärmetauscherrohren kein Reststaub festsetzen und anbacken kann.

Ferner können die vorgesehenen Rußbläsersysteme während des Betriebes und nach Abschalten der Anlage aktiviert werden und die Wärmetauscherrohre unterstützend staubfrei blasen, so daß zum einen während des Betriebes ein frühzeitiges Verstopfen vermieden wird und zum anderen Restablagerungen sicher verhindert werden können.

Funktion und Aufgabe der Synthesegas-Wärmetauscher-Anlage ist es, ein Synthesegas, das beispielsweise bei einer Kohlevergasung entsteht, von einer Verbrennungstemperatur von ca. 1850 °C bis 1400 °C auf Raumtemperatur herunterzukühlen, um das Gas einer nachgeschalteten Kaltgasreinigung zuzuführen. Nach dieser Reinigung ist aus dem Synthese- bzw. Rohgas ein sogenanntes "Reingas" geworden, das zur Vorwärmung für die weitere Nutzung durch den Rohgas-Reingas-Wärmetauscher geführt wird und danach zu einer Gasturbine oder anderem Verbraucher geleitet wird.

Soll die in der Entwicklung befindliche "Heißgasreinigung" zur Anwendung kommen, kürzt man den "Kühlweg" des Gases je nach Erfordernis ab und leitet den Haupt- oder auch Teilstrom in die Heißgasreinigung.

Bei der Abkühlung des Synthesegases in der Synthesegas-Wärmetauscher-Anlage wird die fühlbare Wärme des Synthesegases zur Erzeugung von Dampf und zur Vorwärmung des Reingases und von Stickstoff bzw. Inertgasen verwendet.

Es ist Aufgabe der Anlagenoptimierung, die Ein- und Austrittstemperaturen der einzelnen Ausrüstungen festzulegen. Dadurch ergeben sich die entsprechenden Geometrien der Ausrüstungen, die Optimierung ist zwischen Ausrüstungskosten, Wirkungsgrad, Funktionsqualität und anderes durchzuführen.

Wenn man den Gasweg verfolgt, so durchströmt das Synthesegas mit relativ geringer Geschwindigkeit den Synthesegas-Strahlungskühler in Richtung der herabfallenden Schlacke. Die Umlaufströmung in den Kesselrohren ist der Gasströmung entgegengerichtet.
Am Ende des Synthesegas-Strahlungskühlers verläßt das Synthesegas z. B. über zwei um 180° versetzte Gasaustrittsleitungen den Synthesegas-Strahlungskühler und strömt in vertikal oder geneigt angeordneten Synthesegas-Konvektionskühler mit seinen geradlinig ausgeführten Wärmetauscherrohren ein. Das Synthesegas strömt durch diese Rohre, die von außen im Gegenstrom wassergekühlt sind. An den Synthesegas-Konvektionskühler schließen sich die Gas-/Gas-Wärmetauscher an, ebenfalls vertikal oder geneigt angeordnet (Rohgas-Reingas-Wärmetauscher/Rohgas-Inertgas-Wärmetauscher). Diese Tauscher bestehen ebenfalls aus geraden Rohren, die im Gegenstrom, Gleichstrom oder Kreuzstrom betrieben werden.

Hier erfolgt auf der einen Seite eine weitere Abkühlung des Rohsynthesegases, andererseits eine Vorwärmung des gereinigten Synthesegases und eines Inertgases, beispielsweise Stickstoff, der von einer Luftzerlegungs-Anlage geliefert wird. Reingas und Stickstoff werden zur Brennkammer einer Gasturbine geleitet, wo das Reingas verbrannt wird.

Der Stickstoff reduziert die Brenntemperatur, was die Erzeugung von Stickoxyden verhindert (mindert), ebenso erhöht er den Volumenstrom des Gases, der auf die Turbinenschaufeln geleitet wird.

Die beiden Züge der Synthesegas-Konvektionskühler und der Rohgas-/Reingas- und Rohgas-/Inertgas-Wärmetauscher mit ihren Verbindungsleitungen sind völlig formgleich ausgeführt und identisch angeordnet, trotzdem besteht die Gefahr der ungleichmäßigen Massenstromverteilung des Synthesegases in den beiden Zügen. Wird diese Schieflage der Massenströme nicht zu Beginn korrigiert, dann vergrößert sich diese Schieflage während des laufenden Betriebes. Dies kann zur Funktionsunfähigkeit des Systems und damit zum Abschalten der Anlage führen.

Diese Schieflage wird durch eine Regelung des Massenstromes in jedem einzelnen Zug entweder vor dem Synthesegas-Konvektionskühler oder nach den Rohgas-/Gas-Wärmetauschern in den Verbindungsleitungen zu dem Staubabscheider verhindert. Dadurch wird sichergestellt, daß alle Synthesegaslinien denselben Massenstrom des Synthesegases aufweisen, was zu einer geregelten Funktionstüchtigkeit des Systems führt.

Eine weitere Maßnahme, um Staubverstopfungen zu vermeiden, besteht darin, die Rohgas-Reingas-/Rohgas-Stickstoff-(Inertgas)-Wärmetauscher und die unteren Verbindungsleitungen mit einer Beheizung zu versehen, um zu verhindern, daß es beim Vorheizen und/oder Anfahren zu Taupunktsunterschreitungen in den Anlagen kommen kann. Die Beheizung kann elektrischer Art sein; sie wird beim Anfahrbetrieb aktiviert und beim stabilen Betrieb ausgeschaltet.

Das erfindungsgemäße System ist ein warmgehendes System mit Radial- und Längsdehnungen, die bei der Aufstellung berücksichtigt werden müssen. Dabei fallen die Längsdehnungen selbstverständlich am stärksten ins Gewicht.

Das Abstützsystem hat seinen oberen Festpunkt am Synthesegas-Strahlungskühler und weist elastische Abstützungen an Synthesegas-Konvektionskühlern und den Rohgas-Reingas- und Rohgas-Inertgas-Tauschern sowie Festabstützungen oder elastische Abstützungen am Abscheider auf. Falls erforderlich, sind Kompensatoren an den unteren Verbindungsleitungen vorzusehen, um Spannungen im System abzubauen.

Die erfindungsgemäße Wärmetauscher-Synthesegas-Anlage wird beispielsweise in einem Kohlekraftwerk mit vorgeschalteter Kohlevergasungsanlage nach dem Reaktor eingesetzt.

Die Erfindung wird anhand von schematischen Zeichnungen näher erläutert.

Es zeigen:
- Fig. 1: eine Vorderansicht der Synthesegas-Wärmetauscher-Anlage,
- Fig. 2: eine Draufsicht auf die Synthesegas-Wärmetauscher-Anlage mit einem Abscheider,
- Fig. 3: eine Draufsicht auf die Synthesegas-Wärmetauscher-Anlage mit zwei Abscheidern,
- Fig. 4: eine Draufsicht auf die Synthesegas-Wärmetauscher-Anlage mit Einzelabzweigungen und zwei Abscheidern,
- Fig. 5: eine Vorderansicht der Synthesegas-Wärmetauscher-Anlage mit jeweils geneigt angeordneten Wärmetauschern,
- Fig. 6: eine Vorderansicht der Synthesegas-Wärmetauscher-Anlage mit Gas-/Gas-Tauschern.

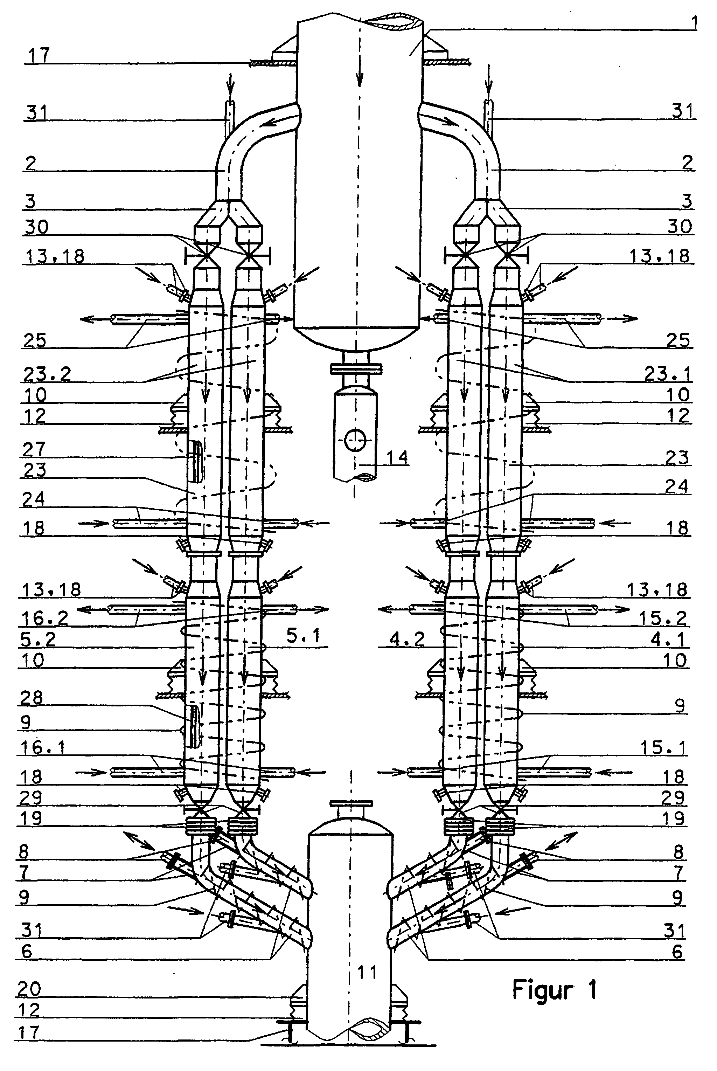

Fig. 1 zeigt eine Vorderansicht der Wärmetauscher-Anlage mit den auf Festpunkten (17) gelagerten Synthesegas-Strahlungskühler (1), von dem zwei obere Verbindungsleitungen (2) über Verzweigungsstücke (3) und den Regelarmaturen (30) zu den Synthesegas-Konvektionskühlern (23) führen. Beide Synthesegas-Konvektionskühler-Linien sind jeweils zweizügig (23.1, 23.2) ausgeführt und jeweils über Pratzen (10) elastisch abgestützt (12). Die Synthesegas-Konvektionskühler (23) weisen geradlinig verlaufende Rauchrohre (27) auf, der Wärmetausch erfolgt durch im Gegenstrom geführtes Kühlwasser, das über die Stutzen (24) dem Synthesegas-Konvektionskühler (23) zugeführt bzw. über die Stutzen (25) abgeführt wird.

Jedem Zug (23.1, 23.2) ist ein Rußbläsersystem (13) zugeordnet. Ebenfalls sind Rußbläser (31) in den Verbindungsleitungen (2) angeordnet. Ferner sind an den Synthesegas-Ein- und Austritten der Synthesegas-Konvektionskühler (23) Handlöcher/Mannlöcher (18) vorhanden.

Das von ca. 900 °C - 600 °C auf ca. 600 °C - 300 °C abgekühlte Synthesegas tritt auf der einen Seite in die Rohgas-/Reingas-Wärmetauscher (4.1, 4.2) ein, während auf der anderen Seite die Rohgas-Stickstoff-(Inertgas)-Wärmetauscher (5.1, 5.2) mit dem Synthesegas beaufschlagt werden.

Die vorgenannten Wärmetauscher (4, 5) sind jeweils über Pratzen (10) elastisch abgestützt (12). Sie weisen geradlinig verlaufende Rauchrohre (28) auf, der Wärmetausch erfolgt über Reingas bzw. Inertgas (Stickstoff) mit den entsprechenden Ein- und Austrittsstutzen (Reingas 15.1, 15.2/Stickstoff 16.1, 16.2).

Jedem Zug (4.1, 4.2; 5.1, 5.2) sind ein oder mehrere Rußbläsersysteme (13) zugeordnet. Ferner sind in den Synthesegas-Ein- und Austritten der Rohgas-/Reingas-(4) und der Rohgas-Stickstoff-Wärmetauscher (5) Handlöcher/Mannlöcher (18) vorhanden, ebenso ist eine Beheizung (9) für die Wärmetauscher (23) und (4, 5) vorgesehen.

Das auf ca. 250 °C - 180 °C in den Wärmetauschern (4, 5) abgekühlte Synthesegas verläßt diese über untere Verbindungsleitungen (6) und gelangt in den zentralen Abscheider (11), der auf Pratzen (20) elastisch (12) gelagert oder als Festpunkt (17) ausgeführt ist.

In den Verbindungsleitungen (6) ist jeweils eine Regelarmatur (29) und/oder jeweils ein Rohgas-Massenstrom-Regler (7) eingebaut. Zusätzlich sind Druckwasseranschlüsse 8), eine Beheizung (9) und Kompensatoren (19) vorgesehen sowie die Anordnung von Rußbläsern (31).

Unterhalb des Synthesegaskühlers (1) ist ein Schlackenbrecher (14) angeordnet, in den die aus dem Roh- bzw. Synthesegas abgeschiedenen Schlackeanteile gelangen.

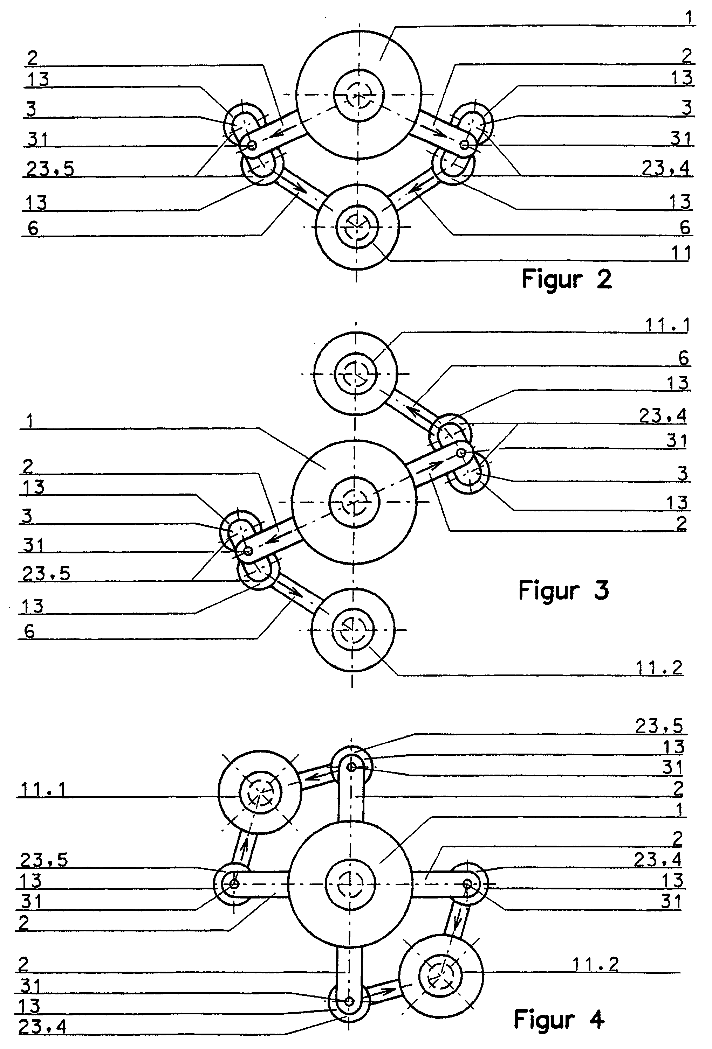

Fig. 2 zeigt eine Draufsicht auf die Wärmetauscher-Anlage mit einem Synthesegas-Strahlungskühler (1) und einem zentralen Staubabscheider (11). Das ungereinigte Rohgas gelangt über die oberen Verbindungsleitungen (2) mit anschließenden Verzweigungsstücken (3), Regelarmaturen (30) und Rußbläsern (13, 31) über die Synthesegas-Konvektionskühler (23.1, 23.2) sowohl in den Rohgas-/Reingas- Wärmetauscher (4) als auch in den Rohgas-/Stickstoff- Wärmetauscher (5), wobei die gleichmäßige Verteilung des Rohgases über in den unteren Verbindungsleitungen (6) angeordneten Massenstromreglern (7) und Regelarmaturen (30) geregelt wird und/oder über die obere Regelarmatur (30).

Fig. 3 zeigt eine Draufsicht auf die Wärmetauscher-Anlage mit einem Synthesegas-Strahlungskühler (1) und zwei dezentralen Staubabscheidern (11.1) und (11.2). Auch hier gelangt das ungereinigte Rohgas über die oberen Verbindungsleitungen (2) mit anschließenden Verzweigungsstücken (3), Regelarmaturen (29) und Rußbläsern (13, 31) über die Synthesegas-Konvektionskühler in die nachgeschalteten Rohgas-/Reingas-Wärmetauscher (4) als auch in die Rohgas-/Stickstoff-Wärmetauscher (5), wobei die gleichmäßige Verteilung des Rohgases über in den unteren Verbindungsleitungen (6) angeordneten Massenstromreglern (7) und Regelarmaturen (29) geregelt wird.

Fig. 4 zeigt eine Draufsicht auf die Wärmetauscher-Anlage mit einem Synthesegas-Strahlungskühler (1) und zwei dezentralen Staubabscheidern (11.1) und (11.2).

Vom Syntheseges-Strahlungskühler (1) zweigen vier Verbindungsleitungen (2) ab, die über Regelarmaturen (30), Rußbläser (13, 31) das Rohgas über die Synthesegas-Konvektionskühler (23.1, 23.2) in die nachgeschalteten Rohgas-Reingas-Wärmetauscher (4) als auch in die Rohgas-Stickstoff-Wärmetauscher (5) leiten, wobei die gleichmäßige Verteilung des Rohgases über in den unteren Verbindungsleitungen (6) angeordneten Massenstrom-Reglern (7) und Regelarmaturen (29) erfolgt.

Für die Kühlung des Rohgases auf die erforderlichen Temperaturen sind jeweils Stutzen (15) für den Reingas-Ein- bzw. Austritt und Stutzen (16) für den Stickstoff-Ein- bzw. Austritt vorgesehen.

Die unteren Verbindungsleitungen (6) sind jeweils mit Massenstromreglern (7), Druckwasseranschlüssen (8), Rußbläsern (31) sowie einer Beheizung (9) ausgestattet. Die Abstützung auf den Festpunkten (17) erfolgt wie zuvor beschrieben.

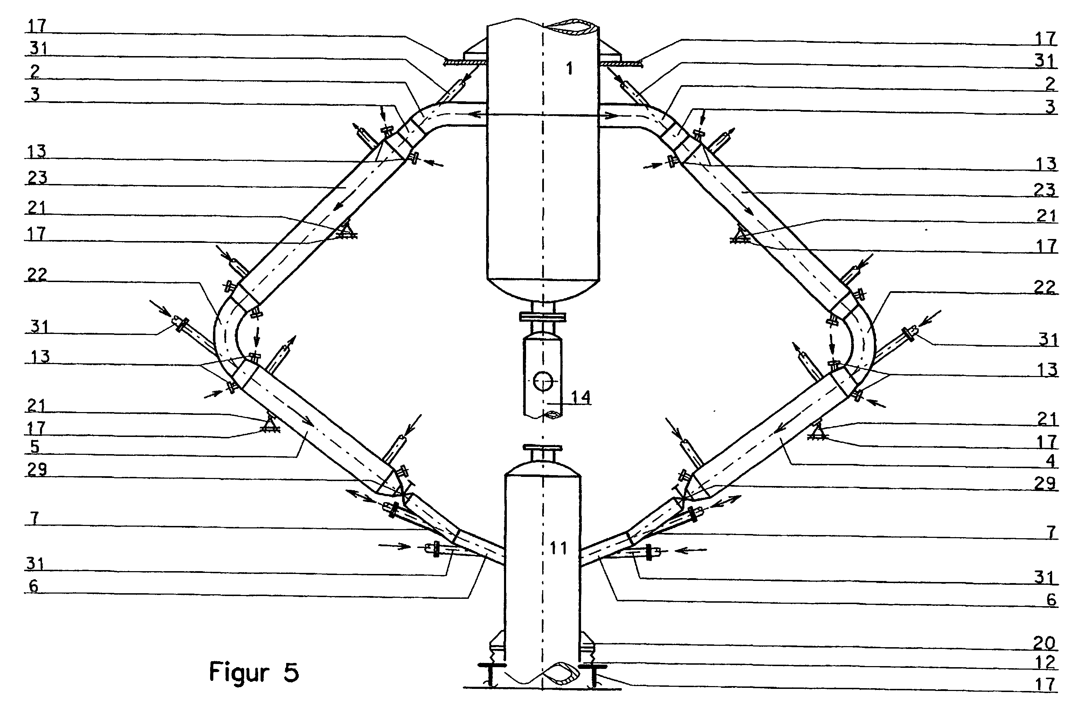

Fig. 5 zeigt eine Vorderansicht durch die zuvor unter Fig. 1 beschriebene Wärmetauscher-Anlage, jedoch mit jeweils geneigt angeordneten Synthesegas-Konvektionskühlern (23) und geneigt angeordneten Reingas- bzw. Stickstoff-Wärmetauschern (4, 5), die durch mittlere, gekrümmte Verbindungsleitungen (22) mit Vorrichtungen zum Einfahren von Rußbläserlanzen (31) miteinander verbunden sind. Sämtliche Wärmetauscher sind am Eintritt mit einem Rußbläsersystem (13) versehen. In den unteren Verbindungsleitungen (6) zum zentralen Staubabscheider (11) sind ebenfalls Massenstromregler (7) und Regelarmaturen (29) sowie Rußbläser (31) vorgesehen.

Die geneigt angeordneten Synthesegas-Konvektionskühler (23) und die Reingas- bzw. Stickstoff-Wärmetauscher (4, 5) sind jeweils über Gleitlager (21) bzw. über elastische Abstützungen (12) auf Festpunkten (17) verlagert. Die Lagerung des zentralen Staubabscheiders (11) erfolgt wie vor beschrieben über Pratzen (20) und elastische (12) oder feste Abstützungen (17).

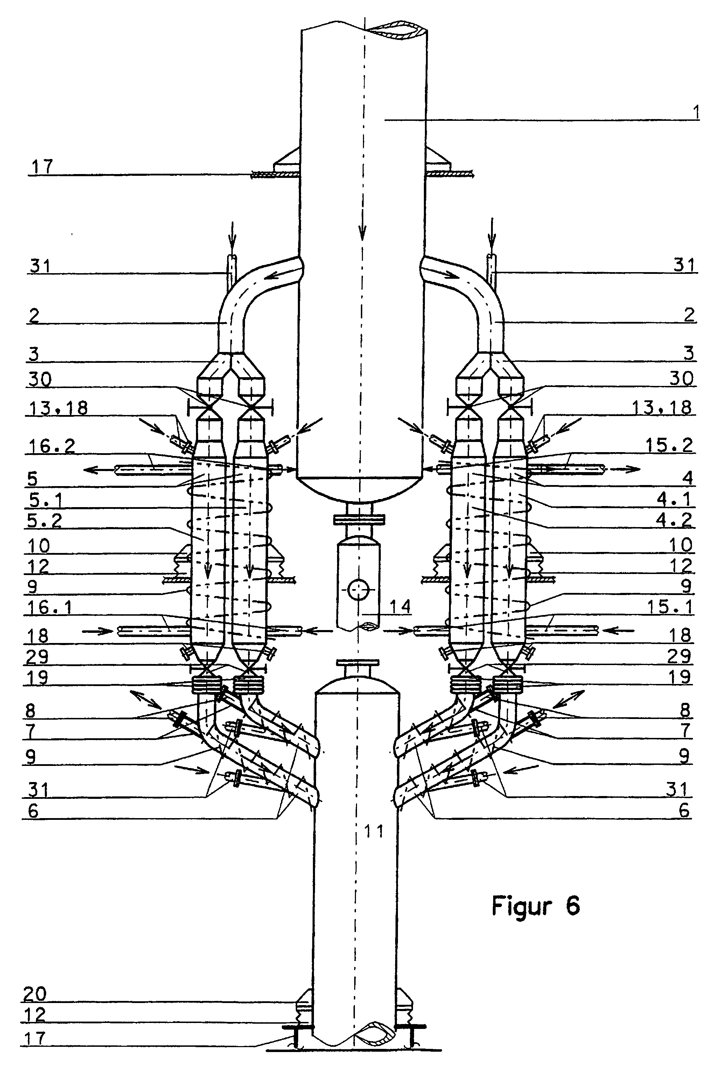

Fig. 6 stellt eine modifizierte Anordnung von Fig. 1 dar. Hier ist auf die Verwendung der Synthesegas-Konvektionskühler verzichtet worden, weil die Austrittstemperatur aus dem Synthesegas-Strahlungskühler (Gasquenchausrüstung) so niedrig ist, so daß die Synthesegas-Konvektionskühler nicht benötigt werden.

Alle weiteren Elemente wie Rußbläser (13, 31), Rohgas-Massenstrom-Regler (7), Regelarmatur (29), Beheizung (9), elastische Abstützung (12), Kompensatoren (19) usw., die in Fig. 1 beschrieben sind, finden hier ihre Anwendung.

### Bezugsziffernliste:

- 1: Synthesegas-Strahlungskühler
- 2: Übergangsleitung/Obere Verbindungsleitung
- 3: Verzweigungsstück
- 4: Rohgas-/Reingas-Wärmeaustauscher
- 4.1: rechter Zug
- 4.2: linker Zug
- 5: Rohgas-/Inertgas-Wärmeaustauscher
- 5.1: rechter Zug
- 5.2: linker Zug
- 6: Untere Verbindungsleitung
- 7: Rohgas-Massenstrom-Regler
- 8: Druckwasseranschluß
- 9: Beheizung
- 10: Pratzen
- 11: Zentraler Abscheider
- 11.1: Einzel-Abscheider nach 4
- 11.2: Einzel-Abscheider nach 5
- 12: Elastische Abstützung
- 13: Rußbläsersystem
- 14: Schlackenbrecher
- 15: Reingas-Eintritt bzw. -Austritt
- 16: Inertgas-Eintritt bzw. -Austritt
- 17: Festpunkt
- 18: Handloch/Mannloch
- 19: Kompensator
- 20: Pratzen
- 21: Gleitlager
- 22: Mittlere Verbindungsleitung
- 23: Synthesegas-Konvektionskühler
- 23.1: rechter Zug
- 23.2: linker Zug
- 24: Kühlwasser-Eintritt
- 25: Kühlwasser-Austritt
- 27: Rauchrohr
- 28: Rauchrohr
- 29: Regelarmatur
- 30: Regelarmatur
- 31: Rußbläser

## Patentansprüche

1. Synthesegas-Wärmetauscher-Anlage mit einem Synthesegas-Strahlungskühler (1), einem Rohgas-Reingas-Wärmetauscher (4), einem Rohgas-Inertgas-Wärmetauscher (5) und mindestens einem Staubabscheider (11), **dadurch gekennzeichnet,**
**dass** nach dem Synthesegas-Strahlungskühler (1) auf der einen Seite mindestens ein Rohgas-Reingas-Wärmetauscher (4) mit oberen Verbindungsleitungen (2) und Übergangsstücken (3) senkrecht oder mit einer Neigung angeordnet ist, und auf der anderen Seite mindestens ein Rohgas-Inertgas-Wärmetauscher (5) mit oberen Verbindungsleitungen (2) und Übergangsstücken (3) senkrecht oder mit einer Neigung angeordnet ist
**dass** die Rohgas-Reingas-Wärmetauscher (4) und der Rohgas-Inertgas-Wärmetauscher (5) mit einem Rußbläsersystem (13) ausgerüstet sind,
und **dass** die unteren Verbindungsleitungen (6) mit einem Rohgas-Massenstrom-Regler (7) versehen und mit einem Abscheider (11) verbunden sind.

2. Synthesegas-Wärmetauscher-Anlage nach Anspruch 1, **dadurch gekennzeichnet,**
**dass** vor dem Rohgas-Reingas-Wärmetauscher (4) und vor dem Rohgas-Inertgas-Wärmetauscher (5) je mindestens ein Synthesegas-Konvektionskühler (23) angeordnet ist.

3. Vorrichtung nach Anspruch 1, **dadurch gekennzeichnet, dass** Rußbläser (31) in den oberen Verbindungsleitungen (2) und in den unteren Verbindungsleitungen (6) angeordnet sind.

4. Vorrichtung nach Anspruch 2, **dadurch gekennzeichnet, dass** die Synthesegas-Konvektionskühler (23) einzügig oder mehrzügig ausgestattet sind.

5. Vorrichtung nach Anspruch 1, **dadurch gekennzeichnet, dass** der Rohgas-Reingas-Tauscher (4) und der Rohgas-Inertgas-Tauscher (5) einzügig oder mehrzügig ausgestattet sind.

6. Vorrichtung nach Anspruch 1, **dadurch gekennzeichnet, dass** der Rohgas-Reingas-Tauscher (4) mit einem Einzel-Staubabscheider (11.1) und der Rohgas-Inertgas-Tauscher (5) mit einem Einzel-Staubabscheider (11.2) verbunden ist, und dass die unteren Verbindungsleitungen (6) mit einem Rohgas-Massenstrom-Regler (7) versehen sind.

7. Vorrichtung nach Anspruch 1 und 2, **dadurch gekennzeichnet, dass** der Synthesegaskonvektionskühler (23), der Rohgas-Reingas-Tauscher (4), der Rohgas-Inertgas-Tauscher (5) und die unteren Verbindungsleitungen (6) mit einer elektrischen Beheizung (9) ausgerüstet sind.

8. Vorrichtung nach Anspruch 1, **dadurch gekennzeichnet, dass** Kompensatoren (19) eingangs in den unteren Verbindungsleitungen (6) vorgesehen sind.

9. Vorrichtung nach Anspruch 1, **dadurch gekennzeichnet, dass** Druckwasseranschlüsse (8) in den unteren Verbindungsleitungen (6) oberhalb der Rohgas-Massenstrom-Regler (7) angeordnet sind.

10. Vorrichtung nach Anspruch 1 und 2, **dadurch gekennzeichnet, dass** der Synthesegas-Strahlungskühler (1) über eine Festpunktabstützung (17), der Synthesegas-Konvektionskühler (23), der Rohgas-Reingas-Tauscher (4) und der Rohgas-lnertgas-Tauscher (5) über Pratzen (10) auf elastischen Abstützungen (12) verlagert sind.

11. Vorrichtung nach Anspruch 1, **dadurch gekennzeichnet, dass** der zentrale Staubabscheider (11) und die Einzel-Staubabscheider (11.1, 11.2) über Pratzen (20) auf elastischen Abstützungen oder über Festpunktabstützungen (17) verlagert sind.

12. Vorrichtung nach Anspruch 1, **dadurch gekennzeichnet, dass** eine Regelarmatur (30) in der oberen Verbindungsleitung (2) vorgesehen ist.

13. Vorrichtung nach Anspruch 1, **dadurch gekennzeichnet, dass** die untere Verbindungsleitung (6) einen Druckwasseranschluss (8) aufweist.

## Claims

1. A synthesis-gas heat-exchanger apparatus comprising a synthesis-gas radiation cooler (1), a crude-gas/pure-gas heat exchanger (4), a crude-gas/inert-gas heat exchanger (5) and at least one dust separator (11), **characterised in that** at least one crude-gas/pure-gas heat exchanger (4) with upper connecting lines (2) and transition pieces (3) is arranged at right-angles or with an inclination after the synthesis-gas radiation cooler (1) on one side, and at least one crude-gas/inert-gas heat exchanger (5) with upper connecting lines (2) and transition pieces (3) is arranged at right-angles or with an inclination on the other side,
that the crude-gas/pure-gas heat exchanger (4) and the crude-gas/inert-gas heat exchanger (5) are equipped with a soot blower system (13),
and that the lower connecting lines (6) are provided with a crude-gas mass-flow regulator (7) and are connected to a separator (11).

2. A synthesis-gas heat-exchanger apparatus according to Claim 1, **characterised in that** at least one synthesis-gas convection cooler (23) in each case is arranged before the crude-gas/pure-gas heat exchanger (4) and before the crude-gas/inert-gas heat exchanger (5).

3. A device according to Claim 1, **characterised in that** soot blowers (31) are arranged in the upper connecting lines (2) and in the lower connecting lines (6).

4. A device according to Claim 2, **characterised in that** the synthesis-gas convection coolers (23) are single-duct or multi-duct.

5. A device according to Claim 1, **characterised in that** the crude-gas/pure-gas exchanger (4) and the crude-gas/inert-gas exchanger (5) are single-duct or multi-duct.

6. A device according to Claim 1, **characterised in that** the crude-gas/pure-gas exchanger (4) is connected to a single dust separator (11.1) and the crude-gas/inert-gas exchanger (5) is connected to a single dust separator (11.2), and that the lower connecting lines (6) are provided with a crude-gas mass flow regulator (7).

7. A device according to Claims 1 and 2, **characterised in that** the synthesis-gas convection cooler (23), the crude-gas/pure-gas exchanger (4), the crude-gas/inert-gas exchanger (5) and the lower connecting lines (6) are equipped with an electric heating means (9).

8. A device according to Claim 1, **characterised in that** compensators (19) are provided at the inlet into the lower connecting lines (6).

9. A device according to Claim 1, **characterised in that** pressurised-water connections (8) are arranged in the lower connecting lines (6) above the crude-gas mass-flow regulators (7).

10. A device according to Claim 1 and 2, **characterised in that** the synthesis-gas radiation cooler (1) is displaced via a fixed-point support (17), the synthesis-gas convection cooler (23), the crude-gas/pure-gas exchanger (4) and the crude-gas/inert-gas exchanger (5) via claws (10) on elastic supports (12).

11. A device according to Claim 1, **characterised in that** the central dust separator (11) and the individual dust separators (11.1, 11.2) are displaced via claws (20) on elastic supports or via fixed-point supports (17).

12. A device according to Claim 1, **characterised in that** a regulating fitting (30) is provided in the upper connecting line (2).

13. A device according to Claim 1, **characterised in that** the lower connecting line (6) has a pressurised-water connection (8).

## Revendications

1. Installation à échangeurs de chaleur pour du gaz de synthèse, comprenant un dispositif (1) de refroidissement par rayonnement du gaz de synthèse, un échangeur de chaleur (4) gaz brut-gaz épuré, un échangeur de chaleur (5) gaz brut-gaz inerte et au moins un séparateur (11) de poussière, **caractérisée en ce qu'**il est monté en aval du dispositif (1) de refroidissement par rayonnement du gaz de synthèse, perpendiculairement ou avec une inclinaison d'un côté, au moins un échangeur de chaleur (4) gaz brut-gaz épuré ayant des conduits (2) supérieurs de mise en communication et des pièces (3) de dérivation et qu'il est monté perpendiculairement ou avec une inclinaison, de l'autre côté, au moins un échangeur de chaleur (5) gaz brut-gaz inerte ayant des conduits (2) supérieurs de mise en communication et des pièces (3) de dérivation,
**en ce que** l'échangeur de chaleur (4) gaz brut-gaz épuré et l'échangeur de chaleur (5) gaz brut-gaz inerte sont munis d'un système souffleur de suie,
et **en ce que** les conduits (6) inférieurs de mise en communication sont munis d'un régulateur (7) de courant massique du gaz brut et communiquent avec un séparateur (11).

2. Installation à échangeurs de chaleur pour du gaz de synthèse suivant la revendication 1, **caractérisée en ce qu'**il est monté en amont de l'échangeur de chaleur (4) gaz brut-gaz épuré et en amont de l'échangeur de chaleur (5) gaz brut-gaz inerte, respectivement, au moins un dispositif (23) de refroidissement par convection du gaz de synthèse.

3. Installation suivant la revendication 1, **caractérisée en ce que** des souffleurs (31) de suie sont montés dans les conduits (2) supérieurs de mise en communication et dans les conduits (6) inférieurs de mise en communication.

4. Installation suivant la revendication 2, **caractérisée en ce que** les dispositifs (23) de refroidissement par convection du gaz de synthèse sont à passage simple ou à passage multiple.

5. Installation suivant la revendication 1, **caractérisée en ce que** l'échangeur de chaleur (4) gaz brut-gaz épuré et l'échangeur de chaleur (5) gaz brut-gaz inerte sont à passage simple ou à passage multiple.

6. Installation suivant la revendication 1, **caractérisée en ce que** l'échangeur de chaleur (4) gaz brut-gaz épuré communique avec un séparateur (11.1) de poussière individuel et l'échangeur de chaleur (5) gaz brut-gaz inerte communique avec un séparateur (11.2) de poussière individuel et **en ce que** les conduits (6) inférieurs de mise en communication sont munis d'un régulateur (7) du courant massique du gaz brut.

7. Installation suivant la revendication 1 et 2, **caractérisée en ce que** le dispositif (23) de refroidissement par convection du gaz de synthèse, l'échangeur de chaleur (4) gaz brut-gaz épuré, l'échangeur de chaleur (5) gaz brut-gaz inerte et des conduits (6) inférieurs de mise en communication sont équipés d'un chauffage (9) électrique.

8. Installation suivant la revendication 1, **caractérisée en ce que** des compensateurs (19) sont prévus à l'entrée dans les conduits (6) inférieurs de mise en communication.

9. Installation suivant la revendication 1, **caractérisée en ce que** des raccords (8) pour de l'eau sous pression sont montés dans les conduits (6) inférieurs de mise en communication au-dessus du régulateur (7) du courant massique du gaz brut.

10. Installation suivant les revendications 1 et 2, **caractérisée en ce que** le dispositif (1) de refroidissement par rayonnement du gaz de synthèse est monté par l'intermédiaire d'un appui (17) à point fixe sur des appuis (12) élastiques, tandis que dispositif (23) de refroidissement par convection du gaz de synthèse, l'échangeur de chaleur (4) gaz brut-gaz épuré et l'échangeur de chaleur (5) gaz brut-gaz inerte sont montés sur des appuis (12) élastiques par l'intermédiaire de griffes.

11. Installation suivant la revendication 1, **caractérisée en ce que** le séparateur (11) de poussière central et les séparateurs (11.1, 11.2) individuels de poussière sont montés sur des appuis élastiques ou sur des appuis (17) à point fixe par l'intermédiaire de griffes (20).

12. Installation suivant la revendication 1, **caractérisée en ce qu'**il est prévu un robinet (30) de réglage dans le conduit (2) supérieur de mise en communication.

13. Installation suivant la revendication 1, **caractérisée en ce que** le conduit (6) inférieur de mise en communication comporte un raccord (8) pour de l'eau sous pression.
